# EUROPÄISCHE PATENTSCHRIFT

(11) **EP 3 559 773 B1**
(45) Veröffentlichungstag und Bekanntmachung des Hinweises auf die Patenterteilung: **22.03.2023**
(21) Anmeldenummer: 17832951.2
(22) Anmeldetag: 20.12.2017
(51) Int. Cl.: G05D 1/02, G05D 1/10

(54) **VERFAHREN ZUR NAVIGATION UND SELBSTLOKALISIERUNG EINES SICH AUTONOM FORTBEWEGENDEN BEARBEITUNGSGERÄTES**
METHOD FOR THE NAVIGATION AND SELF-LOCATION OF AN AUTONOMOUSLY MOVING PROCESSING DEVICE
PROCÉDÉ DE NAVIGATION ET LOCALISATION AUTOMATIQUE D'UN APPAREIL D'USINAGE À DÉPLACEMENT AUTONOME

(30) Priorität: 21.12.2016 DE 102016125224
(43) Veröffentlichungstag der Anmeldung: 30.10.2019
(73) Patentinhaber: Vorwerk & Co. Interholding GmbH, 42275 Wuppertal (DE)
(72) Erfinder: LISS, Raphael, 53225 Bonn (DE)
(74) Vertreter: Müller, Enno
(86) Internationale Anmeldenummer: PCT/EP2017/083873
(87) Internationale Veröffentlichungsnummer: WO 2018/115153

(56) Entgegenhaltungen:
- WO-A1-2015/067797
- WO-A1-2015/142166
- US-A1- 2016 148 417
- US-B1- 6 374 155

## Beschreibung

### Gebiet der Technik

Die Erfindung betrifft ein Verfahren zur Navigation und Selbstlokalisierung eines sich autonom fortbewegenden Bearbeitungsgerätes anhand einer Umgebungskarte innerhalb einer Umgebung, wobei Umgebungsdaten der Umgebung aufgenommen und zu einer ersten Umgebungskarte verarbeitet werden, wobei ein sich autonom fortbewegendes Zusatzgerät die Umgebungsdaten der Umgebung für das Bearbeitungsgerät aufnimmt.

Des Weiteren betrifft die Erfindung ein System aus einem sich autonom fortbewegenden Bearbeitungsgerät und einem sich autonom fortbewegenden Zusatzgerät.

### Stand der Technik

Verfahren zur Navigation und Selbstlokalisierung sich autonom fortbewegender Bearbeitungsgeräte sind im Stand der Technik bekannt.

Die Patentschrift EP 2 330 471 B1 offenbart bspw. ein Verfahren zur Steuerung eines Roboters, vorzugsweise eines selbsttätig verfahrbaren Kehr- und/oder Saugroboters, wobei in dem Roboter eine Karte der Umgebung bzw. eines vorgegebenen Verfahrweges erstellt und abgespeichert wird. Der Roboter weist einen internen Speicher auf, in welchem eine Karte eines oder mehrerer Räume angelegt werden kann, anhand welcher Karte eine gezielte Bodenreinigung in dem angefahrenen Raum erreicht werden kann. In der Karte sind die Raumbegrenzungen und ggf. etwaige Hindernisse in dem Raum abgelegt, sodass anhand der vorliegenden Karte eine günstige Verfahrstrategie des Roboters, bspw. zum Abreinigen des Bodens in dem Raum, erreicht werden kann. Die Karte der Umgebung kann mittels einer entsprechenden Messeinrichtung des Roboters durch Erfassen von Umgebungsdaten der Räumlichkeiten und anschließende Datenverarbeitung angelegt werden.

Weiter ist es bekannt, dem Roboter ein Außengerät zur Steuerung des Roboters zuzuordnen, bspw. in Form einer Fernbedienung, welche mittels entsprechender Befehle geeignet ist, den Roboter zu bedienen. Die von dem Roboter erstellte Umgebungskarte wird auf das Außengerät übertragen und die Position des Roboters innerhalb der Umgebungskarte angezeigt. Des Weiteren ist es auch bekannt, dass eine Umgebungskarte auf dem Außengerät erstellt und/oder ergänzt wird und dann an den Roboter übertragen wird.

Das Dokument WO 2015/142166 A1 offenbart bspw. die Zusammenarbeit zwischen einer sich selbsttätig fortbewegenden Landmaschine und einem Fluggerät, welches eine Umgebungskarte erstellt und an die Landmaschine übermittelt. Aus der Veröffentlichung WO 2015/067797 A1 ist es bekannt, dass ein unbemanntes Luftfahrzeug (UAV) Parameter der Umgebung einer Landmaschine detektiert und diese an die Landmaschine übermittelt. Die Patentschrift US 6 374 155 B1 offenbart ein autonomes mobiles Robotersystem mit einem Navigationsroboter und einem Funktionsroboter. Der Navigationsroboter ist eingerichtet, eine Umgebungskarte zu erstellen und sich sowie den oder die Funktionsroboter innerhalb der Umgebungskarte zu lokalisieren und eine Route für diese zu planen.

### Zusammenfassung der Erfindung

Ausgehend von dem vorgenannten Stand der Technik ist es Aufgabe der Erfindung, ein Verfahren zur Navigation und Selbstlokalisierung eines sich autonom fortbewegenden Bearbeitungsgerätes weiterzuentwickeln.

Zur Lösung der vorgenannten Aufgabe wird zunächst ein Verfahren vorgeschlagen, bei welchem das Zusatzgerät die Umgebungsdaten an einen externen Server übermittelt, und die Umgebungsdaten in dem externen Server zu der ersten Umgebungskarte verarbeitet werden, oder wobei das Zusatzgerät die Umgebungsdaten zu der ersten Umgebungskarte verarbeitet und die erste Umgebungskarte an einen externen Server übermittelt, wobei die in dem externen Server oder von dem Zusatzgerät erstellte erste Umgebungskarte von dem externen Server an das Bearbeitungsgerät übermittelt wird und wobei das Bearbeitungsgerät auch selbst Umgebungsdaten der Umgebung aufnimmt, und die Umgebungsdaten bzw. eine daraus erstellte zweite Umgebungskarte mit der, aus den von dem Zusatzgerät aufgenommenen Umgebungsdaten erstellten ersten Umgebungskarte kombiniert, wobei das Bearbeitungsgerät in die bereits erstellte erste Umgebungskarte von dem Bearbeitungsgerät selbst aufgenommene Umgebungsdaten einfügt oder von dem Bearbeitungsgerät selbst aufgenommene Umgebungsdaten zunächst zu der zweiten Umgebungskarte verarbeitet und dann die erste Umgebungskarte hinzufügt, und wobei das Zusatzgerät dem Bearbeitungsgerät während einer Fortbewegung folgt.

Erfindungsgemäß übermittelt das Zusatzgerät die Umgebungsdaten gemäß einer Ausführung an einen externen Server, wobei die Umgebungsdaten in dem externen Server zu der Umgebungskarte verarbeitet werden. Gemäß dieser Ausführung erfolgt eine Verarbeitung der von dem Zusatzgerät aufgenommenen Umgebungsdaten nicht - oder zumindest nicht ausschließlich - innerhalb des Zusatzgerätes selbst, sondern vielmehr in dem externen Server, auf welchen sowohl das Zusatzgerät als auch das Bearbeitungsgerät Zugriff haben. Das Zusatzgerät selbst muss somit keine Datenverarbeitungseinrichtung oder einen Speicher für die Umgebungsdaten aufweisen. Vielmehr ist es möglich, dass das Zusatzgerät lediglich die Messeinrichtung und ein Kommunikationsmodul aufweist, über welches das Zusatzgerät mit dem externen Server kommunizieren kann. Die Verarbeitung der Umgebungsdaten und die Erstellung der Umgebungskarte erfolgen dann in dem externen Server. Auf besonders vorteilhafte Art und Weise sind die Ressourcen des externen Servers in Bezug auf Rechenleistung und Speicherkapazität weniger beschränkt als bezüglich des Bearbeitungsgerätes bzw. des Zusatzgerätes. Das Zusatzgerät und das Bearbeitungsgerät kommunizieren mit dem externen Server bspw. innerhalb eines gemeinsamen lokalen Netzwerks, insbesondere eines WLAN-Netzwerkes, oder über das Internet, Mobilfunk oder dergleichen. Alternativ kann vorgesehen sein, dass das Zusatzgerät die Umgebungsdaten zu der Umgebungskarte verarbeitet und die Umgebungskarte an einen externen Server übermittelt. Bei dieser Verfahrensführung werden die Umgebungsdaten durch das Zusatzgerät selbst zu einer Umgebungskarte verarbeitet, wobei die erstellte Umgebungskarte dann an einen externen Server übermittelt wird. Bspw. kann die Umgebungskarte auch zunächst an den externen Server übermittelt werden und von dort aus, ggf. unter Kombination mit weiteren Umgebungsdaten, insbesondere Umgebungsdaten weiterer Bearbeitungsgeräte und/oder Zusatzgeräte, an das Bearbeitungsgerät übermittelt werden. Das Zusatzgerät verfügt in diesem Fall über eine Datenverarbeitungseinrichtung und entsprechende Algorithmen, mittels welcher die Umgebungsdaten zu der Umgebungskarte kombiniert werden können. In diesem Zusammenhang kann es auch vorgesehen sein, dass die Umgebungsdaten zunächst zu einer groben Umgebungskarte innerhalb des Zusatzgerätes kombiniert werden, wobei diese grobe Umgebungskarte dann an den externen Server übermittelt wird, um schließlich dort einer weiteren Bearbeitung, ggf. unter Hinzufügung weiterer Umgebungsdaten, unterzogen zu werden. Das Bearbeitungsgerät nimmt des Weiteren auch selbst Umgebungsdaten der Umgebung auf und kombiniert die Umgebungsdaten bzw. eine daraus erstellte Umgebungskarte mit der aus den von dem Zusatzgerät aufgenommenen Umgebungsdaten erstellten Umgebungskarte. Somit nimmt nicht nur das Zusatzgerät Umgebungsdaten der Umgebung auf, sondern auch das Bearbeitungsgerät selbst. Die Umgebungsdaten des Bearbeitungsgerätes können dann entweder zu einer separaten Umgebungskarte verarbeitet werden oder mit Umgebungsdaten bzw. einer Umgebungskarte des Zusatzgerätes kombiniert werden. Dadurch ergibt sich besonders vorteilhaft die Kombination unterschiedlichster Umgebungsdaten bzw. Umgebungskarten, welche aus verschiedenen Perspektiven und/ oder innerhalb verschiedener Detektionsebenen aufgenommen wurden. Insbesondere können Hindernisse aus verschiedenen Perspektiven aufgenommen werden, sodass diese in Bezug auf ihre Dimensionen umfassend erfasst werden können und besonders realitätsnah innerhalb der Umgebungskarte dargestellt werden können. Dabei kann es auch vorgesehen sein, dass das Bearbeitungsgerät als Grundlage für die weitere Bearbeitung zunächst eine Umgebungskarte aus den Umgebungsdaten des Zusatzgerätes erstellt bzw. eine bereits von dem Zusatzgerät erstellte Umgebungskarte als Basis verwendet und in diese Umgebungskarte von dem Bearbeitungsgerät selbst aufgenommene Umgebungsdaten einfügt. Alternativ können auch die eigenen Umgebungsdaten des Bearbeitungsgerätes zunächst zu einer Umgebungskarte verarbeitet werden und dann die zusätzlichen Umgebungsdaten des Zusatzgerätes bzw. eine daraus erstellte Umgebungskarte hinzugefügt werden.

Erfindungsgemäß wird vorgeschlagen, dass das Zusatzgerät dem Bearbeitungsgerät während einer Fortbewegung folgt, sich insbesondere mit einem konstanten Abstand zu diesem fortbewegt. Bei dieser Ausgestaltung folgt das Zusatzgerät im Wesentlichen einer Route des Bearbeitungsgerätes, jedoch bspw. in einer darüber liegenden Ebene. Dabei kann der Abstand zwischen dem Bearbeitungsgerät und dem Zusatzgerät stets konstant sein, sodass die örtliche Beziehung zwischen dem Bearbeitungsgerät und dem Zusatzgerät auf besonders einfache Art und Weise stets bekannt ist. Dabei kann es auch vorgesehen sein, dass das Zusatzgerät dem Bearbeitungsgerät zu einem bestimmten Ziel folgt, bspw. zu einer Basisstation, an welcher sowohl ein Akkumulator des Bearbeitungsgerätes als auch ein Akkumulator des Zusatzgerätes aufgeladen werden können.

Das Zusatzgerät bewegt sich autonom innerhalb der Umgebung fort und nimmt dabei Umgebungsdaten auf, welche als Grundlage für die Erstellung einer Umgebungskarte dienen. Es ist nicht erforderlich, dass ein Nutzer das Zusatzgerät manuell innerhalb der Umgebung umherträgt und dabei eine Messung von Umgebungsdaten durchführt. Der Vorgang der Aufnahme von Umgebungsdaten kann somit einem vordefinierten Muster folgen, bspw. entlang einer vordefinierten Fortbewegungsroute des Zusatzgerätes. Das Verfahren wird somit im Zusammenspiel zweier sich autonom fortbewegender Geräte ausgeführt, nämlich einerseits durch das Bearbeitungsgerät und andererseits durch das Zusatzgerät, wobei diese vorteilhaft voneinander abweichende Perspektiven auf die Umgebung haben und somit unterschiedliche Umgebungsdaten aufnehmen können, welche ggf. auch miteinander kombiniert werden können, um die Genauigkeit der Umgebungskarte zu steigern und die Navigation und Selbstlokalisierung des Bearbeitungsgerätes zu optimieren. Das Zusatzgerät weist zu diesem Zweck eine Messeinrichtung, vorteilhaft eine Abstandsmesseinrichtung oder eine Kamera, auf, mittels welcher die Umgebungsdaten aufgenommen werden können. Grundsätzlich funktioniert das Verfahren zur Navigation des Bearbeitungsgerätes auch, wenn nur das Zusatzgerät eine Messeinrichtung aufweist und nur das Zusatzgerät Umgebungsdaten zur Erstellung einer Umgebungskarte aufnimmt. Erfindungsgemäß ist jedoch vorgesehen, dass sowohl das Zusatzgerät als auch das Bearbeitungsgerät entsprechende Umgebungsdaten aufnehmen, welche miteinander kombiniert werden, sodass alle Vorteile der Erfindung genutzt werden können, insbesondere die Aufnahme von Umgebungsdaten aus verschiedenen Perspektiven innerhalb der Umgebung, mittels unterschiedlicher Arten von Messeinrichtungen des Bearbeitungsgerätes und des Zusatzgerätes.

Vorteilhaft können die Umgebungsdaten mittels einer Messeinrichtung, bspw. einer optischen Triangulationsmesseinrichtung, des Zusatzgerätes aufgenommen werden. Die Messeinrichtung weist eine Lichtquelle und einen Lichtempfänger auf. Während einer Fortbewegung des Zusatzgerätes innerhalb der Umgebung misst die Messeinrichtung die Entfernungen zu Hindernissen, welche als Grundlage für die Erstellung der Umgebungskarte dienen. Abhängig von einem gemessenen Abstand zu einem Hindernis kann dann das Bearbeitungsgerät Rangier- und Ausweichbewegungen tätigen, um nicht mit dem Hindernis zu kollidieren. Die Messeinrichtung des Zusatzgerätes misst die Hindernisse in einer Ebene bzw. aus einer Perspektive, welche im Wesentlichen durch den Strahlengang von der Lichtquelle zu dem Lichtempfänger vorgegeben ist. Diese Detektionsebene bzw. Perspektive unterscheidet sich vorteilhaft von einer Detektionsebene bzw. Perspektive einer Messeinrichtung des Bearbeitungsgerätes. Dadurch, dass das Zusatzgerät sich autonom innerhalb der Umgebung fortbewegt, ergeben sich durch die Fortbewegung unmittelbar unterschiedliche Perspektiven während einer Vermessung, sofern sowohl eine Messeinrichtung des Zusatzgerätes als auch eine Messeinrichtung des Bearbeitungsgerätes Umgebungsdaten aufnehmen. Bspw. kann eine Detektionsebene des Zusatzgerätes über einer Detektionsebene des Bearbeitungsgerätes liegen, oder die Detektionsebene des Bearbeitungsgerätes kann im Wesentlichen horizontal angeordnet sein, während die Messeinrichtung des Zusatzgerätes in einer Ansicht von oben auf die Umgebung und damit ggf. auch auf das innerhalb der Umgebung vorhandene Bearbeitungsgerät schaut. Besonders vorteilhaft erfolgt das Erstellen der Umgebungskarte dann anhand der von beiden Messeinrichtungen erfassten Umgebungsdaten. Durch die Kombination der Umgebungsdaten des Zusatzgerätes und der Umgebungsdaten des Bearbeitungsgerätes kann die Umgebungskarte aus einer größeren Vielzahl von Umgebungsdaten und ebenso auch unterschiedlichen Arten von Umgebungsdaten erstellt werden. Dadurch kann ein Hindernis in der Umgebungskarte auf eine Art und Weise erfasst und dargestellt werden, welche der optischen Wahrnehmung eines Nutzers des Bearbeitungsgerätes möglichst realitätsnah nachempfunden ist. Bspw. kann die Messeinrichtung des Bearbeitungsgerätes in einer bodennahen Detektionsebene messen, innerhalb welcher bspw. bezogen auf einen Stuhl nur die Stuhlbeine des Stuhls messbar sind, während die Messeinrichtung des Zusatzgerätes das Hindernis, nämlich den Stuhl, als Ganzes in einer Draufsicht detektiert, sodass eine Kombination der Umgebungsdaten insgesamt zu einer realitätsnahen Darstellung des Hindernisses in der Umgebungskarte führt. Als Perspektive für die Messeinrichtung des Zusatzgerätes bietet sich insbesondere eine Draufsicht auf die Hindernisse an, da hier geschlossene Flächenbereiche erkannt werden können, die die Messeinrichtung des Bearbeitungsgerätes in einer horizontalen Detektionsebene nicht wahrnehmen kann. Insbesondere kann aus der Perspektive der Messeinrichtung des Zusatzgerätes auch eine Höhe eines Hindernisses bestimmt werden, welche eine Information darüber gibt, ob das Bearbeitungsgerät unter diesem Hindernis hindurchfahren kann oder nicht.

Das sich autonom fortbewegende Bearbeitungsgerät kann bspw. ein Saugroboter, ein Wischroboter, ein Mähroboter, ein Polierroboter oder dergleichen sein. Des Weiteren sind auch Bearbeitungsgeräte mit kombinierten Funktionen denkbar, bspw. ein kombinierter Saug-Wisch-Roboter. Das Zusatzgerät, welches sich ebenfalls autonom innerhalb der Umgebung fortbewegen kann, kann ebenfalls ein solches Bearbeitungsgerät sein oder ein Zusatzgerät, welches nur der Aufnahme der Umgebungsdaten dient und sich zu diesem Zwecke innerhalb der Umgebung fortbewegt, jedoch keine weiteren Bearbeitungsfunktionen, wie bspw. eine Saug- und/oder Wischfunktion aufweist. Grundsätzlich können das Bearbeitungsgerät und das Zusatzgerät auch baugleich ausgebildete Geräte sein, wobei in diesem Fall jeweils das, das Zusatzgerät darstellende Gerät Umgebungsdaten für das, das Bearbeitungsgerät darstellende Gerät aufnimmt. Grundsätzlich können die Geräte auch derart miteinander wechselwirken, dass beide sowohl als Bearbeitungsgerät als auch als Zusatzgerät funktionieren, wobei diese in der Art Umgebungsdaten aufnehmen und an jeweils das andere Gerät übermitteln, dass stets jedes Gerät Zugang zu allen aufgenommenen Umgebungsdaten hat. Dadurch ist ein umfangreiches zur Verfügung stellen von Umgebungsdaten mehrerer Gerät untereinander möglich.

Die Messeinrichtung des Zusatzgerätes und/oder des Bearbeitungsgerätes kann auf unterschiedliche Art und Weise ausgebildet sein. Bspw. kann die Messeinrichtung eine Abstandsmesseinrichtung aufweisen, welche mittels optischer und/oder Ultraschall-Signale funktioniert, eine ein Bild der Umgebung aufnehmende Kamera, ein Kontaktsensor, eine Odometrie-Messeinrichtung und/oder Weiteres. Im Falle eines eine Kamera bzw. einen Kamerachip aufweisenden Zusatzgerätes können die Umgebungsdaten direkt als Bilddaten, insbesondere auch als Farbinformationen enthaltende RGB-Daten, erfasst werden, welche besonders vorteilhaft in die Umgebungskarte eingebunden werden können. Dadurch wird es gleichzeitig auch möglich, die Hindernisdaten der Messeinrichtung mit weiteren Umgebungsdaten zu kombinieren, um bspw. die Größe und/oder Farbe des Bearbeitungsgerätes und/oder der Hindernisse in der Umgebungskarte darzustellen. Darüber hinaus kann die abgebildete Größe bspw. auch mit den bekannten Dimensionen des Bearbeitungsgerätes verglichen werden, um daraus die Größe, insbesondere Höhe, von Hindernissen besser abschätzen zu können.

Es empfiehlt sich, dass das Zusatzgerät und das Bearbeitungsgerät einen gemeinsamen Bezugspunkt innerhalb der Umgebung aufweisen, sodass ggf. Umgebungsdaten des Bearbeitungsgerätes und des Zusatzgerätes miteinander kombiniert werden können bzw. stets die Position und Orientierung sowohl des Bearbeitungsgerätes als auch des Zusatzgerätes innerhalb der Umgebung bekannt sind. Es empfiehlt sich, dass die Messeinrichtung des Zusatzgerätes einen Ursprung innerhalb der Umgebung nutzt, welcher einem Punkt des Bearbeitungsgerätes entspricht. Somit ist stets eine örtliche Beziehung zwischen dem Bearbeitungsgerät und dem Zusatzgerät bekannt, sodass die von dem Zusatzgerät aufgenommenen Umgebungsdaten für das Bearbeitungsgerät nutzbar sind. Bspw. kann das Zusatzgerät, wenn sich dieses nicht im Einsatz befindet, auf einem Gehäuse des Bearbeitungsgerätes angeordnet oder sonst wie ortsfest mit diesem verbunden sein. Alternativ wäre es auch möglich, dass sowohl das Bearbeitungsgerät als auch das Zusatzgerät ein gemeinsam nutzbares Basisgerät innerhalb der Umgebung aufweisen, bspw. zum Aufladen eines Akkumulators des Bearbeitungsgerätes bzw. des Zusatzgerätes. Dieses Basisgerät kann einen definierten Nullpunkt innerhalb der Umgebung angeben, auf welchen sich die Ortskoordinaten der Umgebungsdaten des Bearbeitungsgerätes und/oder des Zusatzgerätes zurückbeziehen.

Vorteilhaft bewegt sich das Zusatzgerät autonom innerhalb der Umgebung, wobei jedoch auch vorgesehen sein kann, dass das Zusatzgerät mittels eines weiteren Gerätes, insbesondere einer Fernsteuerung, gesteuert wird. Die Fernsteuerung kann dabei ein Smartphone, ein anderes mobiles Kommunikationsgerät oder auch ein ortsfester Rechner sein. Dadurch ergibt sich für einen Nutzer des Zusatzgerätes eine zusätzliche Steuerungsfunktion. Neben einer manuellen Eingabe eines Steuerbefehls für das Zusatzgerät kann es dabei auch vorgesehen sein, dass die Steuerung des Zusatzgerätes mittels Gesten, Augenbewegung oder dergleichen erfolgt.

Es wird vorgeschlagen, dass sich das Zusatzgerät zeitlich vor einer Fortbewegung des Bearbeitungsgerätes innerhalb der Umgebung fortbewegt und Umgebungsdaten aufnimmt, Bei dieser Ausführung bewegt sich zunächst das Zusatzgerät durch die Umgebung und nimmt für das Bearbeitungsgerät Umgebungsdaten auf, aus welchen später die Umgebungskarte erstellt werden kann. Erst wenn die Umgebungsdaten bzw. die daraus erstellte Umgebungskarte von dem Zusatzgerät an das Bearbeitungsgerät übermittelt wurden, unter Zwischenschaltung des externen Servers, nimmt das Bearbeitungsgerät eine entsprechende Fortbewegung auf der Basis dieser Umgebungsdaten auf und navigiert innerhalb der Umgebung. Diese Ausführungsform ist insbesondere geeignet, wenn bspw. eine Fortbewegung des Bearbeitungsgerätes nicht zu einer Belastung des Akkumulators des Bearbeitungsgerätes führen soll oder aber das Bearbeitungsgerät derzeit noch andere Arbeitstätigkeiten ausführt, an einer Basisstation gewartet wird oder dergleichen.

Insbesondere kann vorgesehen sein, dass sich das Zusatzgerät innerhalb der Umgebung fahrend oder fliegend fortbewegt. Das Zusatzgerät kann somit insbesondere auf einem Boden der Umgebung fahren oder innerhalb der Umgebung fliegen, um Umgebungsdaten bspw. aus einer Draufsicht aufzunehmen. Das fliegende Zusatzgerät kennt bspw. durch einen an einer Basisstation oder dem Bearbeitungsgerät definierten Nullpunkt einen Anfangsabstand zu einem definierten Ort und misst davon ausgehend kontinuierlich die Höhe während des Fluges. Durch die Höhenmessung kann der Abstand zu der Bodenfläche konstant gehalten werden, vorzugsweise in Bodennähe, damit Hindernisse für das Bearbeitungsgerät bestmöglich erkannt werden können, insbesondere auf einem von dem Zusatzgerät aufgenommenen Kamerabild. Das Zusatzgerät kann während des Fluges Personen und Tiere als sich bewegende Objekte erkennen und daraufhin bspw. eine andere Höhe einnehmen, um eine Kollision zu vermeiden. Das Zusatzgerät hat dabei vorrangig ein Kamerasystem, dessen Erfassungsbereich auf eine Bodenfläche gerichtet ist. Das Kamerasystem kann ein 2D- oder ein 3D-Kamerasystem sein, ggf. kombiniert mit einem Weitwinkelobjektiv. Zusätzlich kann das Zusatzgerät auch einen Sensor zur Höhenmessung und/oder auch eine Messeinrichtung aufweisen, deren Erfassungsbereich in Flugrichtung orientiert ist, um Hindernisse auch frühzeitig innerhalb der Fortbewegungsroute, d.h. der Flugroute, des Zusatzgerätes erkennen zu können.

Des Weiteren wird vorgeschlagen, dass das Zusatzgerät Umgebungsdaten mit einem zugehörigen Referenzwert vergleicht, wobei von dem Referenzwert abweichende Umgebungsdaten, insbesondere Umgebungsdaten über eine Verschmutzung und/oder eine Objektbewegung, und eine Ortsinformation über den die abweichenden Umgebungsdaten aufweisenden Ort an das Bearbeitungsgerät übermittelt werden. Gemäß dieser Ausgestaltung kann das Zusatzgerät mittels seiner Messeinrichtung bspw. besondere und/oder starke Verschmutzungen innerhalb der Umgebung erkennen und diese an das Bearbeitungsgerät melden. Daraufhin kann sich dann das Bearbeitungsgerät an denjenigen Ort, welcher die Verschmutzung aufweist, bewegen, um dort bspw. eine entsprechende Reinigung durchzuführen. Der Referenzwert, mit welchem die beobachteten Umgebungsdaten, bspw. Verschmutzungen, verglichen werden, kann dabei ein Verschmutzungsgrad sein, welcher insbesondere für jeweils unterschiedliche Bodenbeläge festgelegt ist. Des Weiteren können auch andere Zustände einer zu bearbeitenden bzw. zu reinigenden Fläche bzw. Umgebung beobachtet werden, bspw. ein Feuchtegrad oder auch ein Bewegungszustand eines Objektes. Sofern das Zusatzgerät feststellt, dass eine Abweichung von einem Referenzwert bzw. einer bestimmten Referenzbandbreite vorliegt, werden die auffälligen Umgebungsdaten mitsamt einer Ortsinformation über den zugehörigen Ort an das Bearbeitungsgerät übermittelt, ggf. unter Zwischenschaltung eines externen Servers. Diese Information kann bspw. genutzt werden, um mittels des Bearbeitungsgerätes eine gezielte Spotreinigung an diesem Ort durchzuführen. Sofern es sich bei den abweichenden Umgebungsdaten um eine festgestellte Objektbewegung handelt, können diese mit einer besonderen Information darüber versehen sein, in welche Richtung und ggf. mit welcher Geschwindigkeit das Objekt wandert, sodass diese Information bei Routenplanungen berücksichtigt werden kann. Das Zusatzgerät kann sich vorteilhaft in vorgegebenen Zeitabständen durch die Umgebung bewegen und dabei Umgebungsdaten aufnehmen, wobei das Bearbeitungsgerät nur dann zum Einsatz kommt und sich innerhalb der Umgebung fortbewegt, wenn zuvor von dem Zusatzgerät eine besondere Situation festgestellt wurde, welche von einem definierten Referenzwert oder Referenzbereich abweicht. Das Zusatzgerät meldet dem Bearbeitungsgerät dann den Ort, sodass das Bearbeitungsgerät diesen gezielt anfahren kann. Somit gibt das Zusatzgerät dem Bearbeitungsgerät vor, wann dieses eine Bearbeitungstätigkeit aufzunehmen hat. In diesem Zusammenhang oder auch losgelöst davon kann ebenfalls vorgesehen sein, dass das Zusatzgerät auch andere Tätigkeiten übernimmt, wie bspw. das Überwachen von Räumlichkeiten für den Fall, dass das Zusatzgerät gerade keine Hilfstätigkeit für das Bearbeitungsgerät auszuführen hat. Wenn in diesem Fall eine außergewöhnliche Situation innerhalb der Räumlichkeiten festgestellt wird, bspw. ein Glasbruch, eine aufgeschwenkte Tür oder dergleichen, kann das Zusatzgerät seinerseits bspw. das Bearbeitungsgerät zu Hilfe rufen, damit dieses bspw. mithilfe seiner Messeinrichtung weitere Messungen zur Einschätzung der Situation durchführt, dort eine Reinigungsaufgabe ausführt, oder dergleichen.

Neben dem zuvor beschriebenen Verfahren wird mit der Erfindung ebenso ein System aus einem sich autonom fortbewegenden Bearbeitungsgerät und einem sich autonom fortbewegenden Zusatzgerät vorgeschlagen, wobei das Bearbeitungsgerät und das Zusatzgerät ausgebildet und eingerichtet sind, ein Verfahren mit einem oder mehreren der zuvor vorgeschlagenen Merkmale auszuführen.

Das Bearbeitungsgerät kann bspw. ein Reinigungsroboter, Serviceroboter, Saugroboter, Wischroboter, Mähroboter oder dergleichen sein. Das Zusatzgerät kann ein ebensolcher Roboter oder auch ein Roboter sein, welcher ausschließlich die Aufgabe der Erfassung von Umgebungsdaten und ggf. das Erstellen einer Umgebungskarte aus diesen Umgebungsdaten hat. Das Bearbeitungsgerät ist vorzugsweise ausgebildet, sich fahrend auf einer zu bearbeitenden Fläche zu bewegen. Das Zusatzgerät kann sich bspw. ebenfalls fahrend auf der Fläche fortbewegen und/ oder fliegend innerhalb der Umgebung, bspw. in Form einer Flugdrohne, fortbewegen. Das Zusatzgerät weist für die Erfassung von Umgebungsdaten eine Messeinrichtung auf, welche bspw. eine Abstandsmesseinrichtung, eine Kamera, einen Kontaktsensor, eine Odometrie-Mess-einrichtung und/oder dergleichen umfasst. Das Bearbeitungsgerät kann ebenfalls über eine solche Messeinrichtung verfügen. Zu dem System gehört - wie zuvor bereits in Bezug auf das Verfahren erläutert - ein externer Server, welcher sowohl mit dem Zusatzgerät als auch dem Bearbeitungsgerät in Kommunikationsverbindung steht. Zum Zwecke der Datenübermittlung weisen das Zusatzgerät und das Bearbeitungsgerät jeweils ein Kommunikationsmodul auf. Gleiches gilt ebenfalls für den zu dem System gehörenden externen Server. Das Zusatzgerät und auch das Bearbeitungsgerät können über eine Datenverarbeitungseinrichtung zur Verarbeitung der Umgebungsdaten zu einer Umgebungskarte verfügen und/oder ggf. über einen Datenspeicher zur Speicherung der Umgebungsdaten und/oder erstellten Umgebungskarte. Im Sinne der Erfindung sind das Zusatzgerät und das Bearbeitungsgerät so korrespondierend zueinander ausgebildet, dass von dem Zusatzgerät aufgenommene Umgebungsdaten und/oder eine daraus erstellte Umgebungskarte von dem Bearbeitungsgerät empfangen werden und/oder als Grundlage für Steuerbefehle dienen, welche eine Fortbewegung und/oder Bearbeitungstätigkeit des Bearbeitungsgerätes innerhalb der Umgebung betreffen.

### Kurze Beschreibung der Zeichnungen

Im Folgenden wird die Erfindung anhand von Ausführungsbeispielen näher erläutert. Es zeigen:
- Fig. 1: eine Umgebung mit einem System aus einem Bearbeitungsgerät und einem Zusatzgerät,
- Fig. 2: eine Fortbewegung des Zusatzgerätes relativ zu dem Bearbeitungsgerät (nicht erfindungsgemäßes Ausführungsbeispiel),
- Fig. 3: das Bearbeitungsgerät und das Zusatzgerät während einer gekoppelten Bewegung (erfindungsgemäßes Ausführungsbeispiel).

### Beschreibung der Ausführungsformen

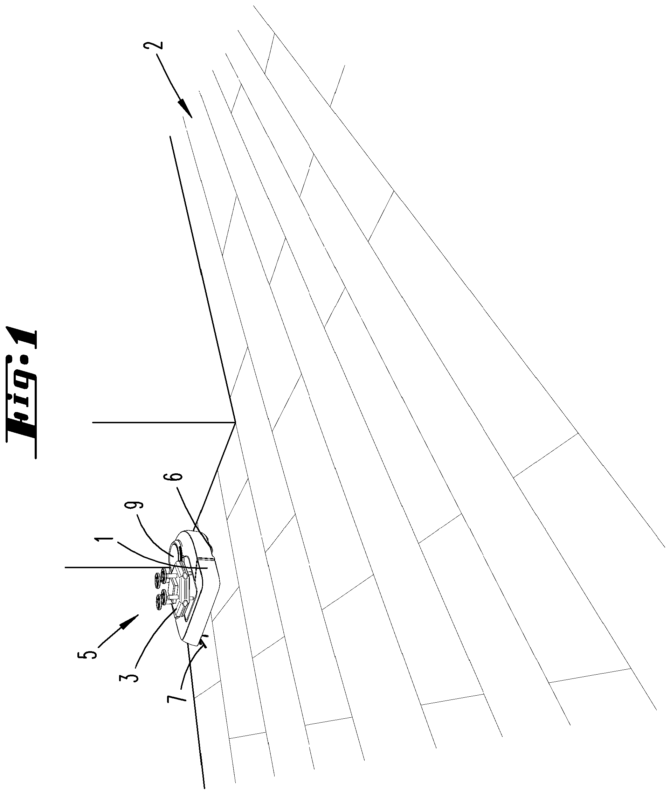

Figur 1 zeigt ein System 5 aus einem Bearbeitungsgerät 1 und einem Zusatzgerät 3. Das Bearbeitungsgerät 1 ist hier als Saugroboter ausgebildet und kann sich selbsttätig innerhalb einer Umgebung 2 fortbewegen. Das Bearbeitungsgerät 1 weist ein Gehäuse auf, an welchem unterseitig, einer zu reinigenden Fläche der Umgebung 2 zugewandt, elektromotorisch angetriebene Räder 6 sowie eine über die Unterkante eines Gehäusebodens hinausragende, gleichfalls elektromotorisch angetriebene Bürste 7 angeordnet sind. Weiter weist das Bearbeitungsgerät 1 im Bereich der Bürste 7 eine nicht weiter dargestellte Saugmundöffnung auf, über welche mittels einer Motor-Gebläse-Einheit mit Sauggut beaufschlagte Luft in das Bearbeitungsgerät 1 angesaugt werden kann. Für die Elektroversorgung der einzelnen Elektrokomponenten des Bearbeitungsgeräts 1, wie für den Antrieb der Räder 6 und der Bürste 7 und darüber hinaus weiter vorgesehene Elektronik, weist das Bearbeitungsgerät 1 einen nicht dargestellten, wiederaufladbaren Akkumulator auf.

Das Bearbeitungsgerät 1 ist des Weiteren mit einer Messeinrichtung 9 ausgestattet, welche innerhalb des Gehäuses des Bearbeitungsgerätes 1 angeordnet ist. Die Messeinrichtung 9 ist hier bspw. eine Triangulationsmesseinrichtung, welche Abstände zu Hindernissen innerhalb der Umgebung 2 des Bearbeitungsgerätes 1 messen kann. Die Messeinrichtung 9 weist im Einzelnen eine Laserdiode auf, deren emittierter Lichtstrahl über eine Umlenkeinrichtung aus dem Gehäuse des Bearbeitungsgerätes 1 herausgeführt und um eine in der gezeigten Orientierung des Bearbeitungsgerätes 1 senkrechte Drehachse rotierbar ist, insbesondere mit einem Messwinkel von 360 Grad. Dadurch ist eine Rundum-Abstandsmessung möglich.

Mithilfe der Messeinrichtung 9 kann die Umgebung 2 des Bearbeitungsgerätes 1 in einer bevorzugt horizontalen Ebene vermessen werden, d.h. in einer zu der zu reinigenden Fläche im Wesentlichen parallelen Ebene. Dadurch kann das Bearbeitungsgerät 1 unter Vermeidung einer Kollision mit Hindernissen in der Umgebung 2 bewegt werden. Die mittels der Messeinrichtung 9 aufgenommenen Umgebungsdaten, welche Abstände zu Hindernissen und/oder Wänden in der Umgebung 2 darstellen, werden zur Erstellung einer Umgebungskarte der Umgebung 2 genutzt.

Auf dem Gehäuse des Bearbeitungsgerätes 1 steht das Zusatzgerät 3, welches hier als Flugdrohne ausgebildet ist. Das Bearbeitungsgerät 1 und das Zusatzgerät 3 bilden zusammen ein System 5 im Sinne der Erfindung. Das Zusatzgerät 3 weist eine Mehrzahl von Propellern 8 auf, mittels welcher sich das Zusatzgerät 3 von dem Bearbeitungsgerät 1 abheben und innerhalb der Umgebung 2 umherfliegen kann. Das Zusatzgerät 3 verfügt des Weiteren über eine Messeinrichtung 10. Die Messeinrichtung 10 weist hier bspw. zunächst eine Kamera auf, deren Erfassungsbereich auf den Boden der Umgebung 2 gerichtet ist. Des Weiteren verfügt die Messeinrichtung 10 über einen Sensor zur Höhenmessung und eine Abstandsmesseinrichtung, deren Erfassungsbereich im Wesentlichen in einer horizontalen Ebene ausgerichtet ist, um Hindernisse in der Fortbewegungsroute des Zusatzgerätes 3 frühzeitig zu erkennen.

Das Bearbeitungsgerät 1 und das Zusatzgerät 3 verfügen zudem über nicht dargestellte Kommunikationsmodule zur Kommunikation miteinander sowie mit einem externen Server. Des Weiteren verfügen das Zusatzgerät 3 und das Bearbeitungsgerät 1 auch jeweils über eine Datenverarbeitungseinrichtung und einen Datenspeicher.

Grundsätzlich sind zur Navigation des Bearbeitungsgerätes 1 innerhalb der Umgebung 2 und damit auch zur Vermeidung von Hindernissen mehrere Datenverarbeitungsschritte notwendig. Zum einen muss zunächst eine Umgebungskarte aus den Umgebungsdaten zumindest einer Messeinrichtung 9, 10 erstellt werden, was innerhalb der Datenverarbeitungseinrichtung des Bearbeitungsgerätes 1 oder innerhalb der Datenverarbeitungseinrichtung des Zusatzgerätes 3 geschehen kann. Auf der Basis der Umgebungskarte und einer darin bekannten aktuellen Position des Bearbeitungsgerätes 1 wird dann eine vorteilhafte Verhaltensweise des Bearbeitungsgerätes 1 errechnet, welche als Grundlage für einen Steuerbefehl dient. Durch den Steuerbefehl werden dann bspw. die Räder 6 oder die Bürste 7 des Bearbeitungsgerätes 1 angesteuert.

Das Zusatzgerät 3 kennt durch die in Figur 1 dargestellte Ausgangsposition auf dem Bearbeitungsgerät 1 einen Ausgangsabstand zu der zu reinigenden Fläche der Umgebung 2. Von dort aus kann dann eine Fortbewegung des Zusatzgerätes 3 erfolgen, wobei der Bezugspunkt hier vorteilhaft das unbewegt stehende Bearbeitungsgerät 1 ist. Alternativ könnte das Zusatzgerät 3 auch von einer ortsfesten Basisstation aus starten.

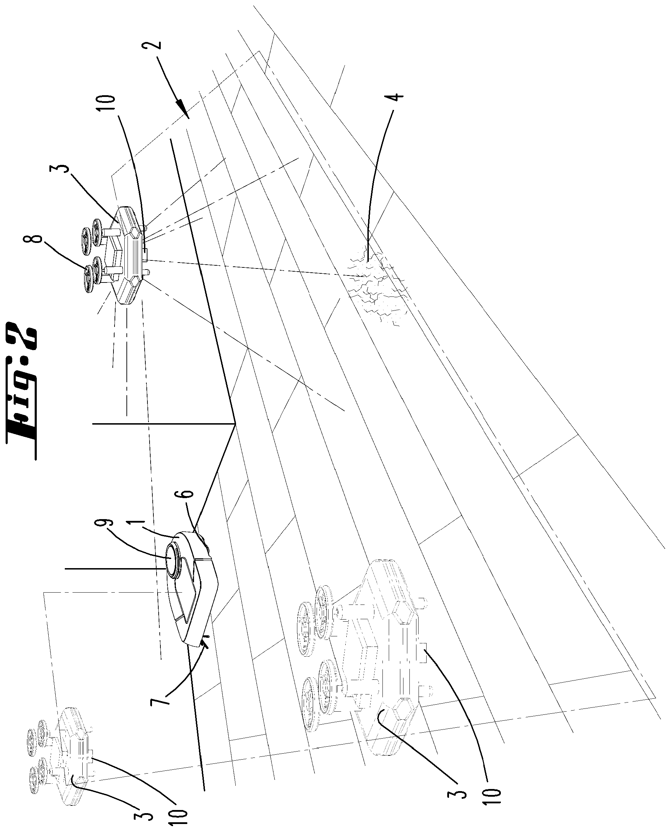

Figur 2 zeigt eine Situation, in welcher das Bearbeitungsgerät 1 weiterhin unbewegt auf der Bodenfläche der Umgebung 2 steht. Das Zusatzgerät 3 befindet sich ausgehend von dem Bearbeitungsgerät 1 auf einem Erkundungsflug und nimmt dabei mittels der Messeinrichtung 10 Umgebungsdaten auf, u.a. eine Verschmutzung 4 auf der Bodenfläche der Umgebung 2.

Gemäß der dargestellten nicht erfindungsgemäßen Ausführung funktioniert die Erfindung bspw. so, dass das Zusatzgerät 3 autonom innerhalb der Umgebung 2 umherfliegt. Dabei kann dieses entweder einer zuvor definierten Flugroute folgen, nach einem Zufallsprinzip und unter Mitarbeit der Abstandssensoren innerhalb der Umgebung 2 umherfliegen oder bspw. auch durch einen Nutzer mittels einer Fernsteuerung, insbesondere einem Mobiltelefon, gesteuert werden. Das Zusatzgerät 3 kennt durch die Ausgangsposition auf dem Gehäuse des Bearbeitungsgerätes 1 einen Ausgangsabstand zu dem Boden der Umgebung 2 und ermittelt während des Fluges kontinuierlich oder auch in regelmäßigen oder unregelmäßigen Abständen die Höhe zu der Bodenfläche. Dabei kann die Höhe zu der Bodenfläche bspw. durch eine Abstandsmessung der Messeinrichtung 10 ermittelt werden. Während des Fluges des Zusatzgerätes 3 wird der Abstand des Zusatzgerätes 3 zu der Bodenfläche bspw. im Wesentlichen konstant gehalten, hier bspw. ca. 1 m, sodass auf den von der Messeinrichtung 10 aufgenommenen Bildern Hindernisse oder besondere Umgebungsdaten der Bodenfläche, wie bspw. Verschmutzungen 4, optimal erkannt werden können. Das Zusatzgerät 3 erkennt während des Fluges des Weiteren sich bewegende Objekte, wie bspw. Personen, Tiere oder auch andere sich selbsttätig fortbewegende Bearbeitungsgeräte 1 oder Zusatzgeräte 3. Um eine Kollision mit diesen zu vermeiden, steuert eine Steuereinrichtung des Zusatzgerätes 3 das Zusatzgerät 3 so, dass die Hindernisse umflogen werden, bspw. durch das Absenken der Flughöhe des Zusatzgerätes 3 auf eine tiefere Ebene oder durch einen Kurvenflug.

Während das Bearbeitungsgerät 1 noch unverändert an derselben Position der Umgebung 2 steht, fliegt das Zusatzgerät 3 die Umgebung 2 ab und erstellt aus den mittels der Messeinrichtung 10 aufgenommenen Umgebungsdaten eine Umgebungskarte mit Hindernissen, Wänden und dergleichen. Aus den Umgebungsdaten können bspw. Gegenstände klassifiziert werden, wie Tische, Stühle, Schränke usw. Dabei werden mittels der Messeinrichtung 10 ebenfalls Abstände zu Gegenständen eingeschätzt. Während der Aufnahme der Umgebungsdaten registriert die Messeinrichtung 10 des Zusatzgerätes 3 neben Hindernissen auch Verschmutzungen 4 der Bodenfläche, welche von einem definierten Referenzwert übermäßig abweichen und somit als besonders starke Verschmutzungen 4 klassifiziert werden, die einer nachfolgenden Reinigung, insbesondere Spotreinigung, durch das Bearbeitungsgerät 1 bedürfen. Die Verschmutzungen 4 werden in die Umgebungskarte eingetragen und entsprechend mit einer Ortsinformation versehen.

Nach dem Flug des Zusatzgerätes 3 oder alternativ dazu auch schon währenddessen, übermittelt die Datenverarbeitungseinrichtung des Zusatzgerätes 3 die Umgebungskarte unter Zwischenschaltung des Servers an das Bearbeitungsgerät 1. Zu diesem Zweck kommunizieren das Zusatzgerät 3 und das Bearbeitungsgerät 1 mittels drahtloser Datenübertragung, insbesondere mithilfe ihrer Kommunikationsmodule. Das Bearbeitungsgerät 1 verfügt anschließend über die Umgebungskarte der Umgebung 2 und kann selbsttätig innerhalb der Umgebung 2 umherfahren, insbesondere die Verschmutzung 4 ansteuern und eine Reinigung durchführen. Dazu greift das Bearbeitungsgerät 1 ausschließlich auf die mittels des Zusatzgerätes 3 erstellte Umgebungskarte zurück.

Alternativ kann auch vorgesehen sein, dass das Bearbeitungsgerät 1 die Umgebungskarte, welche von dem Zusatzgerät 3, erstellt wurde, als solche empfängt und diese ggf. mit Umgebungsdaten der eigenen Messeinrichtung 9 kombiniert und zu einer Umgebungskarte verarbeitet. Ebenso könnte zur Erstellung der Umgebungskarte auch der externe Server verwendet werden. Das Bearbeitungsgerät 1 bzw. der externe Server kann dann bspw. mittels einer entsprechenden Datenverarbeitungseinrichtung entscheiden, ob die Umgebungsdaten des Zusatzgerätes 3 zusätzliche hilfreiche Informationen beinhalten. Falls dies der Fall ist, könnten die Umgebungsdaten des Zusatzgerätes 3 mit den Umgebungsdaten des Bearbeitungsgerätes 1 kombiniert werden.

Während das Bearbeitungsgerät 1 seinerseits autonom innerhalb der Umgebung 2 verfährt, kann das Zusatzgerät 3 bspw. des Weiteren verwendet werden, um eine Hilfstätigkeit für das Bearbeitungsgerät 1 auszuführen, falls das Bearbeitungsgerät 1 in eine Situation gerät, aus welcher sich dieses nicht selbsttätig befreien kann oder eine Situation feststellt, bei welcher bspw. die Messeinrichtung 10 des Zusatzgerätes 3 benötigt wird, um eine Draufsicht auf das Bearbeitungsgerät 1 und die Bodenfläche der Umgebung 2 zu erlangen. Ebenfalls kann dies hilfreich sein, sofern sich ortsveränderliche Hindernisse innerhalb der Umgebung 2 befinden, deren aktueller Ort dem Bearbeitungsgerät 1 verborgen bleibt. In diesen Situationen können die Umgebungsdaten der Messeinrichtung 10 des Zusatzgerätes 3 zur Unterstützung des Bearbeitungsgerätes 1 ausgewertet werden. Dies ist auch dann hilfreich, wenn das Bearbeitungsgerät 1 bspw. die aktuelle Position und Orientierung innerhalb der Umgebung 2 nicht mehr kennt, da ein Nutzer das Bearbeitungsgerät 1 manuell von der Bodenfläche abgehoben und in der Umgebung 2 versetzt hat. Auch kann das Zusatzgerät 3 dem Bearbeitungsgerät 1 einen Weg weisen, indem das Bearbeitungsgerät 1 dem sich fortbewegenden Zusatzgerät 3 folgt. Des Weiteren kann das Zusatzgerät 3 dem Bearbeitungsgerät 1 mehrere mögliche Routenvarianten vorschlagen, um ein bestimmtes Ziel zu erreichen, zu einer Ausgangsposition zu fahren, sich aus einer festgefahrenen Situation zu befreien und dergleichen.

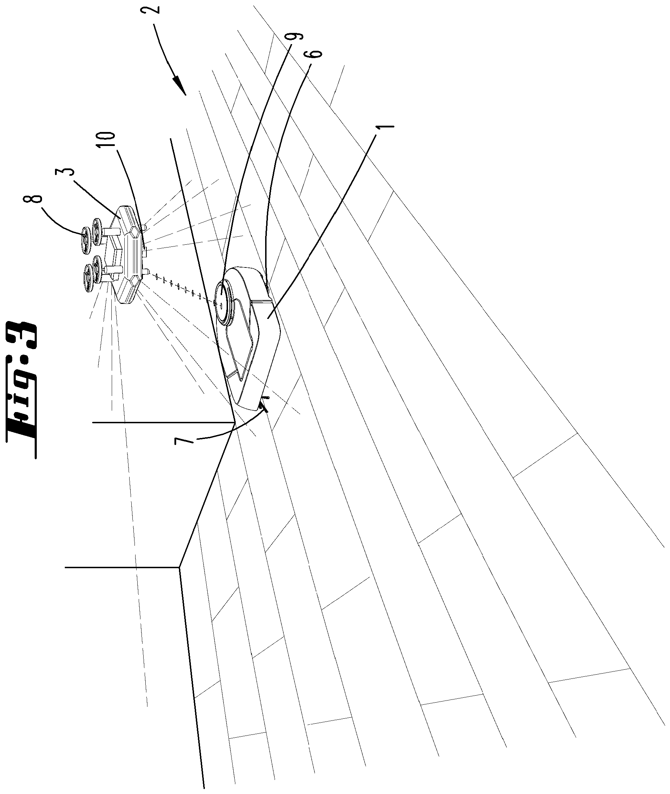

Figur 3 zeigt eine erfindungsgemäße Ausführungsform, bei welcher das Zusatzgerät 3 dem Bearbeitungsgerät 1 während einer Fortbewegung folgt. Dabei dient das Zusatzgerät 3 als Satellit des Bearbeitungsgerätes 1 und folgt diesem in bevorzugt gleichem Abstand. Somit ist gleichzeitig eine Aufnahme von Umgebungsdaten der Umgebung 2 mittels einerseits des Bearbeitungsgerätes 1 und andererseits des Zusatzgerätes 3 möglich, sodass Hindernisse innerhalb der Umgebung 2 aus unterschiedlichen Perspektiven und Abständen detektiert werden können. Auch gemäß dieser Ausführungsform kann die Datenverarbeitung der Umgebungsdaten entweder in dem Zusatzgerät 3, in dem Bearbeitungsgerät 1 oder auf dem externen Server erfolgen.

### Liste der Bezugszeichen

- 1: Bearbeitungsgerät
- 2: Umgebung
- 3: Zusatzgerät
- 4: Verschmutzung
- 5: System
- 6: Rad
- 7: Bürste
- 8: Propeller
- 9: Messeinrichtung
- 10: Messeinrichtung
- 11: externer Server

## Patentansprüche

1. Verfahren zur Navigation und Selbstlokalisierung eines sich autonom fortbewegenden Bearbeitungsgerätes (1) anhand einer Umgebungskarte innerhalb einer Umgebung (2), wobei Umgebungsdaten der Umgebung (2) aufgenommen und zu einer ersten Umgebungskarte verarbeitet werden, wobei ein sich autonom fortbewegendes Zusatzgerät (3) die Umgebungsdaten der Umgebung (2) für das Bearbeitungsgerät (1) aufnimmt, wobei das Zusatzgerät (3) die Umgebungsdaten an einen externen Server übermittelt, und die Umgebungsdaten in dem externen Server zu der ersten Umgebungskarte verarbeitet werden, oder wobei das Zusatzgerät (3) die Umgebungsdaten zu der ersten Umgebungskarte verarbeitet und die erste Umgebungskarte an den externen Server übermittelt, wobei die in dem externen Server oder von dem Zusatzgerät (3) erstellte erste Umgebungskarte von dem externen Server an das Bearbeitungsgerät (1) übermittelt wird, und wobei das Bearbeitungsgerät (1) auch selbst Umgebungsdaten der Umgebung (2) aufnimmt, und die Umgebungsdaten bzw. eine daraus erstellte zweite Umgebungskarte mit der, aus den von dem Zusatzgerät (3) aufgenommenen Umgebungsdaten erstellten ersten Umgebungskarte kombiniert, wobei das Bearbeitungsgerät (1) in die bereits erstellte erste Umgebungskarte von dem Bearbeitungsgerät (1) selbst aufgenommene Umgebungsdaten einfügt oder von dem Bearbeitungsgerät (1) selbst aufgenommene Umgebungsdaten zunächst zu der zweiten Umgebungskarte verarbeitet und dann die erste Umgebungskarte hinzufügt, **dadurch gekennzeichnet, dass** das Zusatzgerät (3) dem Bearbeitungsgerät (1) während einer Fortbewegung folgt.

2. Verfahren nach einem der vorhergehenden Ansprüche, **dadurch gekennzeichnet, dass** sich das Zusatzgerät (3) zeitlich vor einer Fortbewegung des Bearbeitungsgerätes (1) innerhalb der Umgebung (2) fortbewegt und Umgebungsdaten aufnimmt.

3. Verfahren nach einem der vorhergehenden Ansprüche, **dadurch gekennzeichnet, dass** sich das Zusatzgerät (3) mit einem konstanten Abstand zu dem Bearbeitungsgerät (1) fortbewegt.

4. Verfahren nach einem der vorhergehenden Ansprüche, **dadurch gekennzeichnet, dass** sich das Zusatzgerät (3) innerhalb der Umgebung fahrend oder fliegend fortbewegt.

5. Verfahren nach einem der vorhergehenden Ansprüche, **dadurch gekennzeichnet, dass** das Zusatzgerät (3) Umgebungsdaten mit einem zugehörigen Referenzwert vergleicht, wobei von dem Referenzwert abweichende Umgebungsdaten, insbesondere Umgebungsdaten über eine Verschmutzung (4) und/ oder eine Objektbewegung, und eine Ortsinformation über den die abweichenden Umgebungsdaten aufweisenden Ort an das Bearbeitungsgerät (1) übermittelt werden.

6. Verfahren nach Anspruch 5, **dadurch gekennzeichnet, dass** sich das Bearbeitungsgerät (1) nach Empfang der Umgebungsdaten und der Ortsinformation an den Ort bewegt und dort eine Tätigkeit, insbesondere eine Bearbeitungstätigkeit und/oder eine Messtätigkeit, ausführt.

7. System (5) aus einem sich autonom fortbewegenden Bearbeitungsgerät (1) und einem sich autonom fortbewegenden Zusatzgerät (2), **dadurch gekennzeichnet, dass** das Bearbeitungsgerät (1) und das Zusatzgerät (2) ausgebildet und eingerichtet sind, ein Verfahren nach einem der vorhergehenden Ansprüche auszuführen.

## Claims

1. Method for navigation and self-localisation of an autonomously moving processing device (1) on the basis of an environment map within an environment (2), wherein environment data of the environment (2) are recorded and processed to form a first environment map, wherein an autonomously moving additional device (3) records the environment data of the environment (2) for the processing device (1), wherein the additional device (3) transmits the environment data to an external server, and the environment data being processed in the external server to form the first environment map, or wherein the additional device (3) processes the environment data to form the first environment map and transmits the first environment map to the external server, wherein the first environment map created in the external server or by the additional device (3) is transmitted by the external server to the processing device (1), and wherein the processing device (1) itself also records environment data of the environment (2), and combines the environment data or a second environment map created therefrom with the first environment map created from the environment data recorded by the additional device (3), wherein the processing device (1) inserts environment data recorded by the processing device (1) itself into the first environment map already created or processes environment data recorded by the processing device (1) itself first to form the second environment map and then adds the first environment map, **characterised in that** the additional device (3) follows the processing device (1) during a movement.

2. Method according to one of the preceding claims, **characterised in that** the additional device (3) moves within the environment (2) in time before the processing device (1) moves and records environment data.

3. Method according to one of the preceding claims, **characterised in that** the additional device (3) moves at a constant distance from the processing device (1).

4. A method according to one of the preceding claims, **characterised in that** the additional device (3) travels within the environment by driving or flying.

5. Method according to one of the preceding claims, **characterised in that** the additional device (3) compares ambient data with an associated reference value, wherein ambient data deviating from the reference value, in particular ambient data about a contamination (4) and/or an object movement, and location information about the location having the deviating ambient data are transmitted to the processing device (1).

6. Method according to claim 5, **characterised in that** the processing device (1) moves to the location after receiving the environmental data and the location information and carries out an activity there, in particular a processing activity and/or a measuring activity.

7. System (5) comprising an autonomously moving processing device (1) and an autonomously moving additional device (2), **characterised in that** the processing device (1) and the additional device (2) are designed and set up to carry out a method according to one of the preceding claims.

## Revendications

1. Procédé de navigation et d'autolocalisation d'un appareil de traitement (1) se déplaçant de manière autonome à l'aide d'une carte d'environnement à l'intérieur d'un environnement (2), des données d'environnement de l'environnement (2) étant enregistrées et traitées pour former une e première carte d'environnement, un appareil supplémentaire (3) se déplaçant de manière autonome enregistrant les données d'environnement de l'environnement (2) pour l'appareil de traitement (1), l'appareil supplémentaire (3) transmettant les données d'environnement à un serveur externe, et les données d'environnement sont traitées dans le serveur externe pour former la première carte d'environnement, ou l'appareil supplémentaire (3) traite les données d'environnement pour former la première carte d'environnement et transmet la première carte d'environnement au serveur externe, la première carte d'environnement créée dans le serveur externe ou par l'appareil supplémentaire (3) étant transmise par le serveur externe à l'appareil de traitement (1), et l'appareil de traitement (1) enregistrant également lui-même des données d'environnement de l'environnement (2) de combine les données d'environnement ou une deuxième carte d'environnement établie à partir de celle-ci avec la première carte d'environnement établie à partir des données d'environnement enregistrées par l'appareil supplémentaire (3), l'appareil de traitement (1) insérant dans la première carte d'environnement des données d'environnement enregistrées lui-même par l'appareil de traitement (1) lui-même ou traitant d'abord des données d'environnement enregistrées par l'appareil de traitement (1) pour obtenir la deuxième carte d'environnement et ajoutant ensuite la première carte d'environnement, **caractérisé en ce que** l'appareil supplémentaire (3) suit l'appareil de traitement (1) pendant un déplacement.

2. Procédé selon l'une des revendications précédentes, **caractérisé en ce que** l'appareil supplémentaire (3) se déplace dans le temps à l'intérieur de l'environnement (2) avant un déplacement de l'appareil de traitement (1) et enregistre des données d'environnement.

3. Procédé selon l'une des revendications précédentes, **caractérisé en ce que** l'appareil supplémentaire (3) se déplace à une distance constante de l'appareil de traitement (1).

4. Procédé selon l'une des revendications précédentes, **caractérisé en ce que** l'appareil supplémentaire (3) se déplace en roulant ou en volant à l'intérieur de l'environnement.

5. Procédé selon l'une des revendications précédentes, **caractérisé en ce que** l'appareil supplémentaire (3) compare des données d'environnement à une valeur de référence correspondante, des données d'environnement s'écartant de la valeur de référence, en particulier des données d'environnement concernant un encrassement (4) et/ou un mouvement d'objet, et une information de lieu concernant le lieu présentant les données d'environnement s'écartant étant transmises à l'appareil de traitement (1).

6. Procédé selon la revendication 5, **caractérisé en ce que** l'appareil de traitement (1) se déplace vers le lieu après réception des données d'environnement et de l'information de lieu et y exécute une activité, en particulier une activité de traitement et/ ou une activité de mesure.

7. Système (5) constitué d'un appareil de traitement (1) se déplaçant de manière autonome et d'un appareil auxiliaire (2) se déplaçant de manière autonome, **caractérisé en ce que** l'appareil de traitement (1) et l'appareil auxiliaire (2) sont conçus et agencés pour mettre en oeuvre un procédé selon l'une des revendications précédentes.
